# EUROPÄISCHE PATENTSCHRIFT

(11) **EP 1 614 173 B1**
(45) Veröffentlichungstag und Bekanntmachung des Hinweises auf die Patenterteilung: **17.06.2009**
(21) Anmeldenummer: 04726976.6
(22) Anmeldetag: 13.04.2004
(51) Int. Cl.: H01M 8/02, H01M 8/24

(54) **BRENNSTOFFZELLE UND/ODER ELEKTROLYSEUR SOWIE VERFAHREN ZU DEREN/DESSEN HERSTELLUNG**
FUEL CELL AND/OR ELECTROLYZER AND METHOD FOR PRODUCING THE SAME
PILE A COMBUSTIBLE ET/OU ELECTROLYSEUR ET PROCEDE DE FABRICATION ASSOCIE

(30) Priorität: 15.04.2003 DE 10317361
(43) Veröffentlichungstag der Anmeldung: 11.01.2006
(73) Patentinhaber: ElringKlinger AG, 72581 Dettingen (DE)
(72) Erfinder: FINKENWIRTH, Olav, 80339 München (DE); BITTNER, Erich, 91792 Ellingen (DE); SCHNEIDER, Carola, 91781 Weissenburg (DE); DIEZ, Armin, 73252 Lenningen (DE)
(74) Vertreter: nospat Patent- und Rechtsanwälte Naefe Oberdorfer Schmidt
(86) Internationale Anmeldenummer: PCT/EP2004/003892
(87) Internationale Veröffentlichungsnummer: WO 2004/093227

(56) Entgegenhaltungen:
- WO-A-02/101859
- DE-A- 19 637 261
- DE-A- 19 941 282

## Beschreibung

Die Erfindung betrifft eine Brennstoffzelle und/oder einen Elektrolyseur nach dem Oberbegriff des Anspruchs 1 sowie ein Verfahren zu deren/dessen Herstellung nach dem Oberbegriff des Anspruchs 21.

Aus dem Stand der Technik ist es bekannt, dass aufgrund der geringen Spannung, die eine einzelne Brennstoffzelle in der Lage ist, zu liefern, für technische Anwendungen mehrere Zellen zu einem Brennstoffzellenstapel (englisch: stack) in Reihenschaltung zusammengeschaltet werden müssen. Die elektrische Verbindung erfolgt über so genannte Interkonnektoren oder Bipolarplatten. Im Falle eines planaren Stapelaufbaus übernehmen die Bipolarplatten neben der elektrischen Verbindung der einzelnen Zellen zusätzlich die Aufgabe der Brenn- und Oxidgaszuführung zu den Elektroden der Brennstoffzellen sowie die Separierung der Brenn- und Oxidgase benachbarter Zellen.

Die Bipolarplatten sind mit dem metallischen Substrat vakuumplasmagespritzter Festelektrolyt-Brennstoffzellen (so genannter Solid Oxide Fuel Cells = SOFC) stoffschlüssig verbunden, beispielsweise durch Hartlöten, Kondensator-Entladungsschweißen, Rollnahtschweißen oder dergleichen. Dadurch ist eine niederohmige Verbindung zwischen Bipolarplatten und der keramischen Anode der Festelektrolyt-Brennstoffzelle gewährleistet.

Die keramische Kathode der Festelektrolyt-Brennstoffzelle wird ublicherweise durch eine kraftschlüssige Verbindung mit der Bipolarplatte verbunden. Diese Verbindungsart weist einen deutlich höheren Kontaktierungswiderstand auf als die anodenseitige, materialschlüssige Verbindung. Hinzu kommt, dass aufgrund der geringen Flexibilität der Bipolarplatte und der Festelektrolyt-Brennstoffzelle Oberflächenunebenheiten durch Fertigungstoleranzen nur durch sehr hohe Anpresskräfte ausgeglichen werden können, welche wiederum zu einer mechanischen Beschädigung der empfindlichen Keramikschichten der Festelektrolyt-Brennstoffzellen führen können.

Um die elektrische Kontaktierung der Kathode zu verbessern und gleichzeitig Fertigungstoleranzen, wie z. B. Oberflächenrauhigkeiten und -welligkeiten, auszugleichen, wird vor dem Zusammenbau des Festelektrolyt-BrennstoffzellenStapels zwischen einer Kathode und einer Bipolarplatte eine verformbare, keramische Suspension aufgetragen, z. B. mittels Siebdruck oder Nasspulverspritzverfahren. Diese Suspension trocknet und verfestigt sich während der ersten Inbetriebnahme des Brennstoffzellenstapels und bildet eine poröse Funktionsschicht. Eine vollständige Versinterung der Funktionsschicht und der Kathode erfolgt dabei allerdings nicht, da die üblichen Betriebstemperaturen der Festelektrolyt-Brennstoffzelle im Bereich zwischen 750 °C und 900 °C liegen und somit unterhalb der Sintertemperatur der verwendeten Materialien, welche etwa 1400 °C beträgt, liegen.

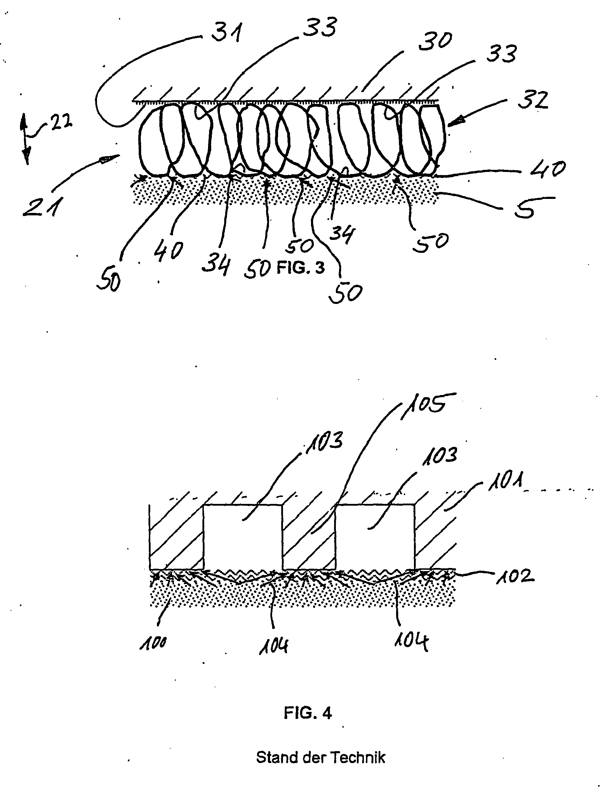

Die so entstehende kraftschlüssige Verbindung einer Bipolarplatte und einer Festelektrolyt-Brennstoffzellen-Kathode hat folgende Nachteile:
1. Es besteht ein Zielkonflikt bei der Optimierung der Dicke der Funktionsschicht: um möglichst hohe Festelektrolyt-Brennstoffzellen- und Bipolarplatten-Fertigungstoleranzen zulassen zu können, muss die Funktionsschicht relativ dick ausgeführt werden. Darüber hinaus bestimmt die Dicke der Funktionsschicht jedoch den elektrischen Widerstand, der durch die Querleitung des Stromes in der Funktionsschicht zum nächstgelegenen Stromabnehmer der Bipolarplatte, z. B. Stege einer Kanalstruktur, verursacht wird. (Vergleiche hierzu Fig. 4, welche weiter unten näher beschrieben wird). Eine dicke Funktionsschicht stellt darüber hinaus trotz ihrer Porosität einen hohen Sauerstofftransportwiderstand zur Kathode dar und vermindert dadurch die elektrische Leistung der Zelle.
2. Da die Funktionsschicht weder an die Bipolarplatte noch an die Kathode ansintert, erreicht die Verbindung zwischen Bipolarplatte und Kathode nur geringe Festigkeit und weist kaum mechanische Flexibilität auf. Besonders im zyklischen Einsatz bei vielen und schnellen Temperaturwechseln, wie sie besonders im mobilen Einsatz einer Festelektrolyt-Brennstoffzellen-Hilfsenergieversorgungseinheit auftreten, kann dies zu einem Versagen der Funktionsschicht in Form von hohen elektrischen Kontaktwiderständen an den Verbindungsflächen zwischen metallischen Bipolarplatten und keramischer Funktionsschicht führen.

Eine solche Festelektrolyt-Brennstoffzelle aus dem Stand der Technik ist als Detailansicht in Fig. 4 dargestellt, wobei der Schichtaufbau im Bereich einer Kathode und einer benachbarten Interkonnektorplatte dargestellt ist. Eine Kathodenschicht 100 einer Festelektrolyt-Brennstoffzelle gemäß dem Stand der Technik ist zur Kontaktierung mit einem benachbarten Interkonnektor bzw. Bipolarplatte 101 mit einer Funktionsschicht 102 versehen, wobei die Funktionsschicht 102 sowohl eine mechanische Verbindung zwischen der Kathode 100 und der Interkonnektorplatte 101 als auch eine elektrische Verbindung zwischen der Kathode 100 und der Interkonnektorplatte 101 bewerkstelligen soll. Üblicherweise Weisen Interkonnektorplatten Kanäle 103 auf, in denen Oxidationsgas, z. B. Luftsauerstoff transportiert wird, wobei der Luftsauerstoff an der Kathode 100 in bekannter Art und Weise Elektronen aufnimmt, sodass ein Stromfluss von der Kathode 100 zu einer Anode (nicht gezeigt) der Festelektrolytbrennstoffzelle stattfindet. Der Stromfluss ist schematisch in Fig. 4 durch die Pfeile 104 dargestellt. Ein Festelektrolyt-Brennstoffzellenaufbau gemäß dem Stand der Technik nach Fig. 4 hat außerdem den Nachteil, dass die Strompfade, welche durch die Pfeile 104 repräsentiert werden, jeweils innerhalb der Kathodenschicht 100 durch die Funktionsschicht 102 zu einem die Kanäle 103 abtrennenden Steg 105 verlaufen. Dieser Stromfluss, welcher je nach Gestaltung der Stege 105 lokal erhöht stattfindet, sorgt für eine ungleichmäßige Ausnutzung der Kathodenschicht 100 und eine lokal ungleichmäßige und bereichsweise höhere Belastung der Kathodenschicht 100 und der Funktionsschicht 102. Dies ist nachteilig und kann durch lokal unterschiedliche Erwärmung zu thermischen Spannungen in den Schichten führen.

Aus der WO 02/101 859 A ist eine Brennstoffzelle gemäß des Oberbegriffs des unabhängigen Anspruchs 1 bekannt.

Aus der DE 19836351 A1 ist eine Hochtemperaturbrennstoffzelle bekannt, bei der zwischen der Anode und der zur Anode nächstliegenden Bipolarplatte ein Nickelnetz angeordnet ist, wobei das Nickelnetz mittels einer metallischen Lötung an der Bipolarplatte elektrisch leitend befestigt ist. Eine Brennstoffzelle gemäß der DE 19836351 A1 weist ebenfalls die oben genannten Nachteile auf, da die Verbindung der Interkonnektorplatte mit der Anode kraftschlüssig erfolgt.

Aus der DE 4237602 A1 ist eine Hochtemperaturbrennstoffzelle bzw. ein Hochtemperaturbrennstoffzellenstapel und ein Verfahren zu deren/dessen Herstellung bekannt, wobei zwischen den Elektroden und den jeweils angrenzenden Bipolarplatten jeweils eine Funktionsschicht vorgesehen ist und wobei die Funktionsschicht bei Betriebstemperatur des Stapels elektronisch leitend und leicht verformbar ist. Eine in der DE 4237602 A1 beschriebene Hochtemperaturbrennstoffzelle entspricht im Wesentlichen dem eingangs beschriebenen Stand der Technik.

Aus der DE 4340153 C1 ist eine Vorrichtung zum Kontaktieren von Elektroden von Hochtemperaturbrennstoffzellen bekannt. Dieses Vorrichtung ist im Wesentlichen als elektrisch leitendes, elastisches und gasdurchlässiges Kontaktkissen mit einer verformbaren Oberflächenstruktur ausgebildet. Diese Vorrichtung liegt im Betrieb der Brennstoffzelle jeweils an der benachbarten Separatorplatte und an der zu kontaktierenden Elektrode lediglich kraftschlüssig an, sodass auch diese Vorrichtung die oben genannten Nachteile nicht verhindern kann.

Aus der DE 19841919 A1 ist ein Brennstoffzellenmodul und ein Verfahren zu dessen Herstellung bekannt, bei dem die Anode mit Hilfe eines Lotes an ihrer zugehörigen Interkonnektorplatte befestigt ist und die Kathode mittels einer keramischen Funktionsschicht elektrisch mit ihrer zugehörigen Interkonnektorplatte verbunden ist. Auch eine solche Brennstoffzelle weist als Nachteil eine mangelnde mechanische Zugfestigkeit zwischen Kathode und deren zugewandter Interkonnektorplatte auf, da die keramische Funktionsschicht sich nicht stoffschlüssig mit der Kathode verbindet und somit Zugkräfte nur unzureichend übertragbar sind.

Aus der DE 19932194 A1 ist ein Verfahren zur Herstellung einer Kontaktschicht auf der Kathodenseite einer Brennstoffzelle bekannt, wobei die Kontaktschicht zwischen der Kathode und einer Interkonnektorplatte bzw. einer dazwischenliegenden Schutzschicht vorgesehen ist und das Verfahren im Wesentlichen folgende Schritte aufweist:
1. Aufbringen von mindestens einer Art von Einzelkarbonaten des Endproduktes Lanthan-Perovskit auf die Interkonnektorplatte oder die Kathode in Form von Pulver, Verlöten der einzelnen Bauelement der Brennstoffzelle unter Last und Wärmeentwicklung, wobei die Einzelkarbonate der Kontaktschicht zunächst kalziniert werden und gleichzeitig die aus den Einzelkarbonaten entstandene Oxidphase der Lanthan-Perovskite zur Kontaktschicht versintert. Anschließend wird die Brennstoffzelle abgekühlt. Somit ist die gemäß dieser Druckschrift herzustellende Kontaktschicht zumindest einseitig mit einer angrenzenden Schicht versintert. Hierdurch entsteht wiederum der in Zugrichtung mangelhaft belastbare Verbund zur bipolarplatte, sodass eine derart hergestellte Brennstoffzelle nach einiger Betriebszeit nachteiligerweise einen erhöhten Übergangswiderstand zwischen Kathode und der zugehörigen Interkonnektorplatte aufweist. Als Verbindungsmedium, welches in der DE 19932194 A1 fälschlicherweise als Lot bezeichnet wird, wird eine Mischung aus Einzeloxiden und Einzelkarbonaten (Ausgangsmaterial) angegeben, welche durch Erhitzen und Pressen zu einem Lanthan-Perovskit reagieren. Somit entsteht als verbindende Schicht eine keramische Schicht aus dem gleichen Material, wie es für die Herstellung einer Kathode verwendet wird. Beim Fügen eines Brennstoffzellenstapels wird durch einen chemischen Kalzinierungs- bzw. durch einen Sinterprozess eine Verbindungsschicht zwischen der Kathode und einer Schutzschicht erzeugt, wobei während der chemischen Reaktion Zwischenprodukte entstehen, welche gegenüber Endprodukten ein unterschiedliches Volumen aufweisen. Dieser Vorgang wird zwar in der DE 19932194 A1 als Lötung bezeichnet. Dies stimmt jedoch mit der allgemein gängigen Definition einer Lötverbindung nicht überein. Eine Lötverbindung ist nach Dubbel, 16. Auflage, Seite G20; 1.2.1 durch das Verbinden erwärmter, in festem Zustand verbleibender Metalle durch schmelzende metallische Zusatzwerkstoffe (Lote) definiert. Eine chemische Reaktion des Lots erfolgt hierbei nicht.

Insofern hat das "Löten" gemäß der DE 19932194 A1 mit dem definitionsgemäßen Lötungsbegriff nur das Erwärmen der zu verbindenden Bauteile gemeinsam.

Bei einer Brennstoffzelle gemäß der DE 19932194 A1 ist weiterhin von Nachteil, dass die entstehende Kontaktschicht eine keramische Kontaktschicht ist, welche auf mechanische Spannungen empfindlich reagiert. Die mechanischen Spannungen können in einer Festelektrolytbrennstoffzelle, welche als Hochtemperaturbrennstoffzelle arbeitet, beispielsweise durch unterschiedliche thermische Ausdehnungen der im Brennstoffzellenstapel vorhandenen Schichten entstehen. Die keramische Kontaktschicht gemäß der DE 19932194 ist durch Sprödbruch-Empfindlichkeit gekennzeichnet, sodass auch bei nur geringer mechanischer Verformung bereits eine Beschädigung der Kontaktschicht und somit eine Verschlechterung des elektrischen Übergangswiderstandes zwischen einer Kathode und einer zugehörigen Interkonnektorplatte auftreten kann.

Aufgabe der Erfindung ist es, eine Brennstoffzelle und/oder einen Elektrolyseur anzugeben, welche(r) widerstandsfähig gegen hohe mechanische und thermische Wechselbelastung ist und zudem eine hohe elektrische Leistungsdichte aufweist. Außerdem soll ein Verfahren zur Herstellung einer Brennstoffzelle und/oder eines Elektrolyseurs angegeben werden, welches einfach und kostengünstig durchführbar ist. Insbesondere soll das Verfahren für eine Großserienproduktion geeignet sein.

Diese Aufgabe wird mit einer Brennstoffzelle und/oder einem Elektrolyseur mit den Merkmalen des Anspruchs 1 sowie einem Verfahren zu deren/dessen Herstellung mit den Merkmalen des Anspruchs 21 gelöst. Vorteilhafte Ausführungsformen werden in den jeweils von den unabhängigen Hauptansprüchen abhängigen Ansprüchen angegeben.

Erfindungsgemäß wird auf der Seite der Bipolarplatte, welche die elektrische Verbindung zur Kathode der benachbarten Festelektrolyt-Brennstoffzelle herstellt, ein luftdurchlässiges, metallisches Kontaktelement materialschlüssig aufgebracht, z. B. mittels Hartlöten, Laserlöten oder Widerstandschweißens. Bei dem metallischen Kontaktelement kann es sich z. B. um ein Gestrick, Gewirk, Geflecht, Gewebe oder um eine perforierte Folie handeln. Es hat die Aufgabe, im Verbund mit einer Funktionsschicht die kathode elektrisch zu kontaktieren. Das Kontaktelement soll auch bei Betriebstemperatur der Festelektrolyt-Brennstoffzelle noch über eine gewisse Elastizität, d. h. Federwirkung, in einer Richtung senkrecht zur Ebene der Festelektrolyt-Brennstoffzellen-Schichten verfügen, um auch nach vielen Temperaturzyklen noch den notwendigen Anpressdruck über die gesamte Kontaktfläche zur Kathode aufrechtzuerhalten. Das Kontaktelement kann daher speziell konstruktiv gestaltet sein, z. B. mit einer Wellen- oder Kanalstruktur versehen sein. Außerdem können definierte Materialeigenschaften, wie z. B. die Federhärte, genutzt werden. Darüber hinaus ist der thermische Ausdehnungskoeffizient des eingesetzten Metalls des Kontaktelements bevorzugt an diejenigen der Bipolarplatten und der keramischen Festelektrolyt-Brennstoffzellenschichten angepasst. Durch die Variation der Maschenweite, Umschlingung und Verschlingungswinkels sowie des Drahtdurchmessers können in das Kontaktelement zur Brennstoffzelle hin sowohl laterale als auch senkrechte Dichtegradienten eingearbeitet werden, die die Optimierung der Sauerstofftransportprozesse ermöglichen.

Eine weitere Ausführungsform des metallischen Kontaktelements kann durch die Einbringung einer zweiten metallischen Phase ausgebildet werden. Dieses zweite Material kann sich durch vorteilhafte Eigenschaften auszeichnen, über die die erste Phase nicht oder nur unzureichend verfügt, wie z. B. hohe elektrische Leitfähigkeit, katalytische Aktivität und/oder hohe Federsteifigkeit. Es kann entweder in Form von Drähten, Fasern und/oder Oberflächenbeschichtungen der erste Phase vorliegen.

Da das metallische Kontaktelement bei hoher Temperatur einem hoch reaktiven Oxidanten ausgesetzt ist, ist es wichtig, dass das verwendete Metall eine stabile, passivierende Oberfläche ausbildet. Um zu verhindern, dass die Oxidhaut dem elektrischen Stromfluss an den Berührungspunkten der Drähte untereinander und an der Grenzfläche zur Funktionsschicht herabsetzt, muss die Oxidhaut des verwendeten Materials eine ausreichende elektrische Leitfähigkeit bei Betriebstemperatur aufweisen, also ein so genannter elektrischer Hochtemperatur-Halbleiter sein.

Die genannten Anforderungen erfüllen z. B. ferritische Stähle mit hohem Chrom- und niedrigem Aluminium- und Siliziumgehalt. Ein geringer Anteil von Seltenerdelementen, wie z. B. Yttrium oder Lanthan verbessert die Haftfestigkeit der passivierenden Oxidhaut auf der Oberfläche der Drähte.

Zusätzlich zum Kontaktelement wird auch weiterhin eine keramische Funktionsschicht zwischen dem metallischen Kontaktelement und der Kathode benötigt, weil der elektrische Kontaktwiderstand zwischen dem metallischen Kontaktelement und der keramischen Kathode aufgrund der geringen Ankopplung der beiden Materialien hoch wäre und durch ihn die Leistung der Festelektrolyt-Brennstoffzelle verringert würde. Darüber hinaus ist die Berührungsfläche der Drahtschlingen, z. B. bei Verwendung eines Gestricks, Gewirks, Gewebes oder Geflechts oder dergleichen, auf der Kathodenoberfläche klein im Verhältnis zur gesamten kontaktierenden Fläche. Dies hätte insbesondere bei hohen Stromflüssen eine lokale Erwärmung der Berührungsflächen und damit einen elektrischen Leistungsverlust zur Folge.

Eine bevorzugte Ausführungsform der Erfindung weist demnach die Kombination einer materialschlüssigen Verbindung des metallischen Kontaktelements zur Bipolarplatte und das Aufbringen einer keramischen Funktionsschicht entweder auf die Kathodenfläche oder auf die Berührungsflächen des metallischen Kontaktelements zur Kathode hin auf. Beim Fügen des Brennstoffzellenstapels vergrößert sich die Kontaktfläche zwischen dem Kontaktelement und der Kathode dadurch um ein vielfaches. Zur Applikation der Funktionsschicht bieten sich verschiedene nasskeramische Beschichtungsverfahren an, wie z. B. die Siebdrucktechnik, das Nasspulversprühen oder Dispensoren mit einer Verfahreinheit. Als Funktionsschicht-Materialien kommen Keramiken aus der Gruppe der Perovskite in Betracht, welche der Kathodenkeramik ähnlich sind und daher einen guten elektrischen Kontakt aufgrund der Affinität der Materialien ermöglichen. Bei der Auswahl der Kontaktschichtmaterialien muss sichergestellt werden, dass keine unerwünschten chemischen Reaktionen mit dem Material der Oxidhäute des metallischen Kontaktelements auftreten können.

Weitere bevorzugte Eigenschaften der Funktionsschicht sind ein an die Kathode und das metallische Kontaktelement angepasster thermischer Ausdehnungskoeffizient und eine Oxidationshemmende Wirkung auf die Metalloberfläche an der Grenzfläche zwischen dem Kontaktelement und der Funktionsschicht.

Die erfindungsgemäße Kombination aus "Bipolarplatte mit materialschlüssig verbundenem, luftdurchlässigem, metallischem Kontaktelement - Funktionsschicht - Kathode gegenüber dem Schichtaufbau gemäß dem Stand der Technik "Bipolarplatte - Funktionsschicht - Kathode" hat folgende Vorteile:
1. Die Fertigungstoleranzen der Bipolarplatte und der Festelektrolyt-Brennstoffzelle werden während des Fügens des Stapels durch die elastischen Eigenschaften des kathodenseitigen metallischen Kontaktelements und der plastischen Verformbarkeit der noch-viskosen Funktionsschicht ausgeglichen.
2. Durch die bei Betriebstemperatur verbleibende Federsteifigkeit des metallischen Kontaktelements, welche ggf. durch das Einbringen eines zweiten Werkstoffs mit verbesserten mechanischen Eigenschaften erhöht werden kann, kann auch nach vielen thermischen Betriebszyklen eine Festelektrolyt-Brennstoffzelle, insbesondere im Einsatz als Hilfsenergieversorgungseinheit, noch von einem ausreichend hohen Anpressdruck des Kontaktelements auf die Kathode bzw. die Funktionsschicht ausgegangen werden.
3. Die Struktur des metallischen Elements kann so ausgelegt werden, dass die Anzahl der Berührungspunkte mit der Funktionsschicht hoch ist und der Abstand der einzelnen Berührungspunkte deutlich geringer ist als im Vergleich zum Stand der Technik, bei dem die Funktionsschicht eine, in der Bipolarplatte notwendigerweise vorhandene, Kanalstruktur direkt kontaktieren würde. Dies führt zu einer besseren, feiner strukturierten mechanischen Verzahnung von metallischen und keramischen Komponenten der Festelektrolyt-Brennstoffzelle.
4. Eine Optimierung der Luftverteilung über der Zellfläche ist in einfacher Art und Weise durch eine eingeprägte Kanalstruktur sowie einen gradierten Aufbau des Kontaktelements leicht zu realisieren.
5. Die vorgenannte Verkürzung der Distanzen zwischen den Berührungspunkten des metallischen Kontaktelements und der Funktionsschicht bewirkt auch eine Verkürzung der Stromleitungspfade in der Funktionsschicht. Dadurch kann der notwendige elektrische Querschnitt und somit die Dicke der nasskeramisch aufgetragenen Funktionsschicht deutlich verringert werden, was wiederum zu einer Verringerung des Sauerstofftransportwiderstands durch die Funktionsschicht zur Kathode und damit zu einer Erhöhung der elektrischen Leistung der Festelektrolyt-Brennstöffzelle führt.
6. Die Funktionsschicht kann prinzipiell nicht nur auf die Kathode sondern auch auf das metallische Kontaktelement aufgetragen werden. Hierbei können Applikationsverfahren, wie Eintauchen, Walzen zum Einsatz kommen. Ein Vorteil bei dieser Variante ist, dass eine flächenmäßig geringere Abdeckung der Kathode durch die Funktionsschicht und damit ein wiederum verringerter Sauerstofftransportwiderstand zur Kathode realisierbar ist.
7. Die Kombination zweier Kontaktelemente, zum einen eines flexiblen metallischen Kontaktelements und zum anderen einer unter Betriebsbedingungen ausgehärteten Funktionsschicht, ermöglicht eine Aufgabenteilung der beiden Elemente. Die metallische Komponente übernimmt den Ausgleich von Fertigungstoleranzen und die Zur-Verfügung-Stellung einer ausreichenden Anpresskraft auf die Funktionsschicht, während die Funktionsschicht hinsichtlich der Absenkung des elektrischen Kontaktwiderstands zwischen metallischer Komponente und Kathode optimiert werden kann.

Im Folgenden wird die Erfindung anhand der Zeichnung beispielhaft näher erläutert. Es zeigen:
- Fig. 1: schematisch einen Querschnitt durch einen Brennstoffzellenstapel mit Einzelbrennstoffzellen gemäß der Erfindung;
- Fig. 2: eine vergrößerte Detailansicht X aus Fig. 1 einer erfindungsgemäßen Kontaktierung einer Kathode mit einer benachbarten Bipolarplatte;
- Fig. 3: schematisiert eine weitere Detailansicht auf eine Interkonnektorplatte, eine Kontaktierungseinrichtung und eine Kathodenschicht einer erfindungsgemäßen Festelektrolyt-Brennstoffzelle;
- Fig. 4: einen Schichtaufbau einer Festelektrolyt-Brennstoffzelle gemäß dem Stand der Technik in einer schematisierten Detailansicht.

Im Folgenden wird die Erfindung beispielhaft anhand der Beschreibung einer Brennstoffzelle erläutert. Alle Angaben gelten selbstverständlich entsprechend für den Betrieb der erfindungsgemäßen Brennstoffzelle als Elektrolyseur.

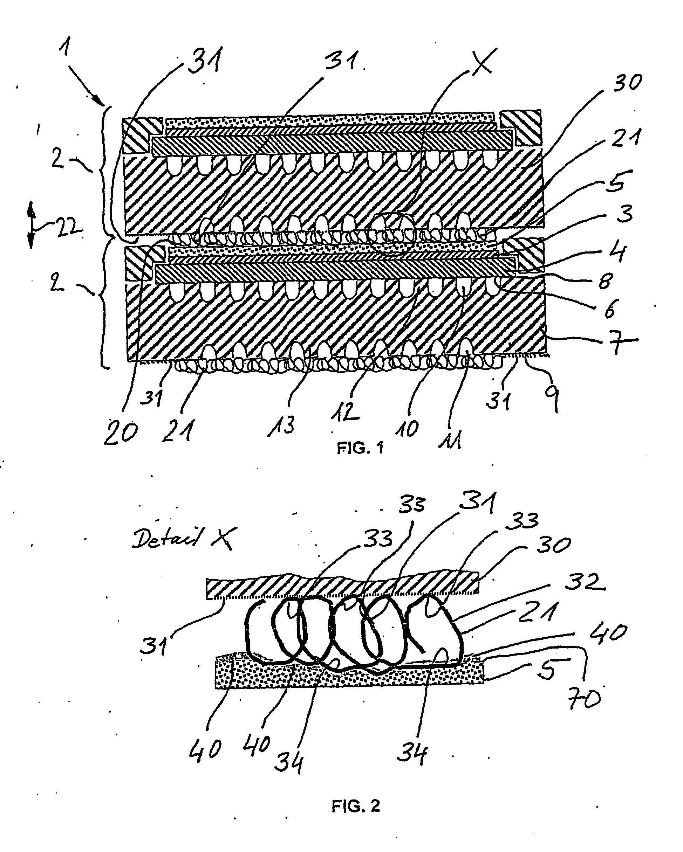

Ein Brennstoffzellenstapel 1 (Fig. 1) weist -mehrere Einzelbrennstoffzellen 2 auf. Die Einzelbrennstoffzellen 2 besitzen eine Elektrolytschicht 3, eine Anodenschicht 4 und eine Kathodenschicht 5, welche in bekannter Art und Weise nach Art einer Festelektrolyt-Brennstoffzelle (SOFC) ausgebildet sind. Die Anodenschicht 4 ist als ein Keramik-Metall-Verbundwerkstoff (englisch: Cermet = Keramik und Metal) aufgebaut und besteht z. B. aus Nickel und Zirkondioxid. Die Elektrolytschicht 3 besteht üblicherweise aus Yttrium-stabilisiertem Zirkoniumoxid. Die Kathodenschicht 5 besteht üblicherweise z. B. aus keramischem Lanthan-Strontium-Manganoxid (LSM), welches oftmals zusätzlich mit Yttrium-stabilisiertem Zirkoniumoxid (YSZ) vermischt ist. Die Anodenschicht 4 ist in den Figuren dicker dargestellt als die Elektrolytschicht 3 und die Kathodenschicht 5. Die Anodenschicht 4 ist ggfs. auf einer mechanisch-tragenden Substratschicht (nicht gezeigt) angeordnet. Mit einer der Elektrolytschicht 3 gegenüberliegenden freien Seite 6 der Anodenschicht 4 bzw. der Substratschicht steht diese mit einem ersten Interkonnektor 7 in Verbindung. Der erste Interkonnektor 7 ist im Wesentlichen plattenförmig aus einem Metall aufgebaut und weist eine erste Flachseite 8 und eine zweite Flachseite 9 auf. Beide Flachseiten 8, 9 weisen im Bereich der elektrisch aktiven Schichten 3, 4, 5 Gaskanäle 10 und 11 auf, wobei die Gaskanäle 10, welche im Bereich der ersten Flachseite 8 angeordnet sind, der Anodenschicht 4 zugewandte Brenngaskanäle sind. Die Gaskanäle 11, welche im Bereich der zweiten Flachseite 9 einer Kathodenschicht 5 zugewandt sind, führen im Betrieb der Brennstoffzelle ein zur Oxidation des Brenngases erforderliches Oxidationsgas, z. B. Luftsauerstoff. Die Gaskanäle 10 sind jeweils durch Stege 12, die Gaskanäle 11 durch Stege 13 voneinander getrennt. Die Anodenschicht 4 steht mit ihrer freien Seite 6 elektrisch leitend und bevorzugt mechanisch stoffschlüssig mit freien Enden der Stege 12 des ersten Interkonnektors 7 in Verbindung. Die Anodenschicht 4 bzw. die Substratschicht ist beispielsweise durch eine Hartlötung, durch eine Kondensatorentladungsschweißung oder durch Laserlöten oder Rollnahtschweißen oder dergleichen geeignete stoffschlüssige Verbindungsarten mit dem ersten Interkonnektor 7 verbunden.

Auf einer der Elektrolytschicht 3 gegenüberliegenden freien Seite 20 der Kathodenschicht 5 ist eine Kontaktierungseinrichtung 21 angeordnet. Die Kontaktierungseinrichtung 21 ist im Wesentlichen schichtförmig ausgebildet und ist beispielsweise ein Gestrick, Gewirk, Netz oder ein perforiertes Blech. Die Kontaktierungseinrichtung 21 ist ebenfalls aus einem elektrisch leitenden Material ausgebildet, welches zudem in einer Richtung 22 senkrecht zu den Schichtebenen der Elektrolytschicht 3, der Anodenschicht 4, der Kathodenschicht 5 und der Kontaktierungseinrichtung 21 elastisch ausgebildet ist. Bevorzugt ist die Kontaktierungseinrichtung 21 somit als insbesondere federnd kompressibles Metalldrahtgestrick, Metalldrahtgewirk, Metalldrahtnetz, Metalldrahtgewölle oder perforierte Metallfolie ausgebildet.

Gemäß einer bevorzugten Ausführungsform können die Kanäle 10 und 11 im Interkonnektor 7 entfallen. In diesem falle übernimmt die gasdurchlässige Kontaktierungseinrichtung 21 die Gaszufuhr bzw. die Reaktionsproduktabfuhr.

Die Kontaktierungseinrichtung 21 ist als ein luftdurchlässiges, poröses, flexibles, metallisches Gebilde ausgebildet. Sie ist aus einem Metall ausgebildet, welches eine stabile, passivierende Oberfläche ausbildet, deren Oxidhaut den elektrischen Stromfluss an den Berührungspunkten der metallischen Kontaktierungseinrichtung 21 mit der Kathodenschicht 5 und einem zweiten Interkonnektor 30 so wenig wie möglich herabsetzt. Zu diesem Zweck muss die Oxidhaut des verwendeten Metalls eine ausreichende elektrische Leitfähigkeit bei Betriebstemperatur der Festelektrolytbrennstoffzelle, welche üblicherweise im Bereich oberhalb von 700°C liegt, aufweisen, also ein so genannter Hochtemperatur-Halbleiter sein. Diese Anforderungen erfüllen z. B. ferritische Stähle mit hohem Chrom- und niedrigem Aluminium-Gehalt. Ein geringer Anteil von Seltenerdelementen, wie z. B. Yttrium oder Lanthan verbessert die Haftfestigkeit der passivierenden Oxidhaut auf der Oberfläche des die Kontaktierungseinrichtung 21 ausbildenden Materials.

Die Kontaktierungseinrichtung 21, welche als Schicht ausgebildet ist, steht mit einer freien Flachseite mit dem zweiten Interkonnektor 30 einer benachbarten Einzelbrennstoffzelle 2 elektrisch leitend und mechanisch stoffschlüssig in Verbindung. Eine mechanisch stoffschlüssige Verbindung 31 zwischen der Kontaktierungseinrichtung 21 und dem zweiten Interkonnektor 30 ist beispielsweise als Hartlötung, Kondensatorentladungsschweißung oder Laserlötung oder dergleichen geeignete Befestigungsart ausgebildet.

Im Folgenden wird beispielhaft der stoffschlüssige Verbund zwischen der Kathodenschicht 5 und dem zweiten Interkonnektor 30 über die Kontaktierungseinrichtung 21 anhand des Details X aus Figur 1, welches in Fig. 2 dargestellt ist, näher erläutert.

Beispielhaft ist in der Fig. 2 die Kontaktierungseinrichtung 21 als Drahtgewölle aus einem dünnen Metalldraht 32 ausgebildet, wobei Metalldrahtbogenabschnitte 33 dem zweiten Interkonnektor 30 zugewandt sind und Metalldrahtbogenabschnitte 34 der Kontaktierungseinrichtung 21 der Kathodenschicht 5 zugewandt sind. Die Metalldrahtbogenabschnitte 33 sind mittels der stoffschlüssigen Verbindung 31 mit dem zweiten Interkonnektor 30 verbunden, wobei z. B. die Metalldrahtbogenabschnitte 33 in einer Schicht der stoffschlüssigen Verbindung 31 eingebettet sind und somit mit dem zweiten Interkonnektor 30 fest, insbesondere zugfest, in einer Richtung 22 verbunden sind.

Die Metalldrahtbogenabschnitte 34, welche der Kathodenschicht 5 zugewandt sind, sind mittels einer insbesondere keramischen Verbindungsschicht 40, welche zum einen stoffschlüssig mit der Kathodenschicht 5 und zum anderen stoffschlüssig und/oder formschlüssig mit der Kontaktierungseinrichtung 21 in Verbindung steht, verbunden.

Die keramische Verbindungsschicht 40 bildet mit der Oxidhaut der Kontaktierungseinrichtung 21 eine besonders stabile stoffschlüssige Verbindung aus.

Die Verbindungsschicht 40 ist bevorzugt als keramische Verbindungsschicht ausgebildet, wobei als geeignete Materialien Keramiken aus der Gruppe der Perovskite bevorzugt zum Einsatz kommen. Die Funktionsschicht-Materialien sind der Kathodenkeramik ähnlich und gewährleisten daher einen guten elektrischen und mechanischen Kontakt aufgrund der Affinität der Materialien ermöglichen. Die Auswahl der Materialien für die Funktionsschicht erfolgt derart, dass sichergestellt ist, dass keine unerwünschten chemischen Reaktionen mit dem Material und dem ggf. vorhandenen Oxidhäuten der metallischen Kontakteinrichtung 21 auftreten. Weiterhin ist es vorteilhaft, für die Verbindungsschicht 40 ein Material auszuwählen, welches einen an die Kathodenschicht 5 und die Kontaktierungseinrichtung 21 angepassten thermischen Ausdehnungskoeffizienten besitzt. Bevorzugt weist das Material der Verbindungsschicht 40 eine oxidationshemmende Wirkung auf die Metalloberfläche im Bereich der Grenzfläche zwischen der Kontaktierungseinrichtung 21 und der Verbindungsschicht 40 auf.

Erfindungsgemäß sind die Metalldrahtbogenabschnitte 34 mit einer freien Oberfläche 70 mittels der Verbindungsschicht 40 stoffschlüssig und/oder formschlüssig eingebettet verbunden. Dies stellt zum einen eine hohe elektrische Leitfähigkeit zwischen der Kathodenschicht 5 und der Kontaktierungseinrichtung 21 sicher und gewährt außerdem eine hohe Zugbelastbarkeit der Verbindung zwischen der Kontaktierungseinrichtung 21 und der Kathodenschicht 5. Somit wird also der mechanische Verbund zwischen dem zweiten Interkonnektor 30 und einer benachbarten Kathodenschicht 5 über die Kontaktierungseinrichtung 21 zugbelastbar sichergestellt, welche auf der Seite des zweiten Interkonnektors 30 mittels einer stoffschlüssigen Verbindung 31 verbunden ist und auf der Seite der Kathodenschicht 5 mittels einer stoffschlüssigen Verbindung 40 der Kathodenschicht 5 in Verbindung steht. Es handelt sich somit also um eine Kombination aus einer stoffschlüssigen Verbindung den Kontaktierungseinrichtung 21 mit dem Interkonnektor 30 und einer stoff- und/oder formschlüssigen Verbindung der Kontaktierungseinrichtung 21 mit der Kathodenschicht 5 und einer stoffschlüssigen Verbindung einer Kathodenschicht 5 einer Brennstoffzelle 2.

Die erfindungsgemäße Anordnung einer elektrischen Kontaktierungseinrichtung 21 zwischen einer Interkonnektorplatte 30 und der Verbindungsschicht 40 hat den Vorteil, dass die Verbindungsschicht 40 zum einen an die Kathodenschicht 5 stoffschlüssig ansintert und zum anderen in die Verbindungsschicht 40 Metalldrahtbögen 34 formschlüssig eingebettet werden können, sodass eine Zugkraft-belastbare Verbindung in einer Richtung 22 ausgebildet ist.

Durch den erfindungsgemäßen Aufbau einer Festelektrolyt-Brennstoffzelle (vergleiche Fig. 3) erfolgt eine Kontaktierung der Kathodenschicht 5 mittels der Kontaktierungseinrichtung 21 in einer Vielzahl von Kontaktstellen, wobei die Kontaktstellen im Wesentlichen gleichmäßig über die Oberfläche der Kathodenschicht 5 verteilt sind. Jede Kontaktstelle bildet einen möglichen Stromleitungspfad 50 zwischen der Kathodenschicht 5 und der Kontaktierungseinrichtung 21, sodass durch die flächig gleichmäßig verteilten Kontaktstellen auch eine flächig gleichmäßige Verteilung der Stromleitpfade bewirkt werden kann. Eine solche gleichmäßige flächige Verteilung der Stromleitpfade 50 hat den Vorteil, dass die Kathodenschicht 5 nicht, wie im Stand der Technik, an bestimmten Stellen lokal stärker strombeaufschlagt ist und an anderen Stellen eine Stromleitung nicht erfolgen kann. Dies führt zu einer flächenmäßig gleichmäßigen Ausnutzung der Kathodenschicht 5 und trägt somit zu einer Leistungssteigerung der erfindungsgemäßen Festelektrolyt-Brennstoffzelle bei. Gemäß einer besonders bevorzugten Ausführungsform kann ggf. auf Kanäle in der Interkonnektorplatte 30 verzichtet werden, da die Oxidationsgaszufuhr durch die poröse, luftdurchlässige Ausgestaltung der Kontaktierungseinrichtung 21 in ausreichend hohem Maße gewährleistet ist. Zudem wird mit einer erfindungsgemäßen Schichtanordnung erreicht, dass die mechanische Verbindung zwischen der Interkonnektorplatte 30 und der Kathodenschicht 5 über die stoffschlüssige Verbindung 31, die Kontaktierungseinrichtung 21 und die stoffschlüssige und/oder formschlüssige Verbindung 40 auch Zugkräfte aufnehmen kann, welche ggf. durch längeren Betrieb der Brennstoffzelle entstehen können. Somit ist auch in einem solchen Betriebszustand eine sichere elektrische Kontaktierung der Interkonnektorplatte 30 mit der Kathodenschicht 5 sichergestellt.

Im Folgenden wird das erfindungsgemäße Verfahren zum Herstellen einer Brennstoffzelle näher erläutert: Die im Folgenden gewählte Reihenfolge der Verfahrensschritte ist für den zeitlichen Ablauf des Herstellverfahrens nicht bindend. Sie dient lediglich zur veranschaulichten Beschreibung des Verfahrens und stellt eine mögliche, insbesondere bevorzugte Abfolge der Herstellungsschritte dar.

Zunächst wird in im Wesentlichen bekannter Art und Weise der elektrochemisch aktive Schichtaufbau, bestehend aus Anodenschicht 4, Elektrolytschicht 3 und Kathodenschicht 5, für eine Hochtemperatur-Festelektrolytbrennstoffzelle hergestellt. Dies kann üblicherweise mittels des Vakuum-Plasmaspritz-Fertigungsverfahrens oder mittels eines sinterkeramischen Fertigungsverfahrens durch Mischen einer metallisch-keramischen Suspension und einem anschließenden Sinterprozess für die jeweilige Schicht erfolgen. Bei dem Vakuum-Plasmaspritz-Fertigungsverfahren wird der Schichtaufbau der einzelnen Schichten 3, 4, 5 durch Einblasen der die Schichten jeweils ausbildenden Materialien in einem Plasmastrahl eines Plasmabrenners hergestellt, wobei der Plasmabrenner beispielsweise mäanderförmig über eine Substratschicht geführt wird, sodass durch das mäanderförmige Verfahren des Plasmabrenners ein schichtweiser Aufbau erreicht wird.

Der Verbund aus Anodenschicht 4, Elektrolytschicht 3 und Kathodenschicht 5 wird anodenseitig mit einer freien Flachseite 8 eines ersten Interkonnektors 7 verbunden, wobei die Verbindung elektrisch leitend und/oder bevorzugt mechanisch stoffschlüssig ausgebildet wird. Hierfür eignen sich insbesondere die Befestigungsarten des Hartlötens, des Kondensatorentladungsschweißens oder des Laserlötens.

In bevorzugt gleicher Art und Weise wie die Befestigung der Anodenschicht 14 auf dem ersten Interkonnektor 7 erfolgt eine Befestigung der Kontaktierungseinrichtung 21 mit einer zweiten Flachseite 9 eines zweiten Interkonnektors 30, sodass eine elektrisch leitende, mechanisch zugfeste Verbindung zwischen der Kontaktierungseinrichtung 21 und dem zugehörigen zweiten Interkonnektor 30 hergestellt wird.

Auf eine freie Oberfläche 70 der Kathodenschicht 5 wird eine geeignete keramische Suspension und/oder eine Paste aus einem die Verbindungsschicht 40 ausbildenden keramischen Material aufgetragen, insbesondere mittels so genannter nasser Applikationstechniken, z. B. Siebdruck, Nasspulversprühen und dergleichen, wobei das Auftragen der die Verbindungsschicht 40 bildenden Masse vor dem Fügeprozess des Brennstoffzellenstapels 1 erfolgt. Ebenso ist es gemäß einer weiteren Ausführungsform des erfindungsgemäßen Verfahrens selbstverständlich möglich, das die Verbindungsschicht 14 ausbildende Material auf die der Interkonnektorplatte 30 gegenüberliegende freie Seite der Kontaktierungseinrichtung 21 beispielsweise durch Walzen oder Bestreichen der Kontaktierungseinrichtung 21 sowie auch durch Eintauchen der freien Seite der Kontaktierungseinrichtung 21 zu bewerkstelligen.

Beim Fügeprozess des Brennstoffzellenstapels 1 wird dann der zweite Interkonnektor 30 mit der angebundenen Kontaktierungseinrichtung 21 auf die freie Seite 20 der Kathodenschicht 5 bzw. auf die vorbereitete Verbindungsschicht 40 aufgesetzt, sodass die Kontaktierungseinrichtung 21 in die Verbindungsschicht 40 eintaucht.

Somit befindet sich zwischen den Metalldrahtbogenabschnitten 34 der Kontaktierungseinrichtung 21 und der Kathodenschicht 5 die vorher aufgetragene Verbindungsschicht 40. In besonders bevorzugter Weise kann eine punktuelle oder teilbereichsweise Anordnung der Verbindungsschicht 40 derart erfolgen, dass die Ausgangsmaterialien für die Verbindungsschicht, also die Suspension, und/oder die Paste auf die der Kathodenschicht 5 zugewandten Seite der Kontaktierungseinrichtung 21 aufgetragen wird, wobei sichergestellt ist, dass die die Verbindungsschicht 40 ausbildenden Materialien lediglich an den Bereichen der Kontaktierungseinrichtung 21 angebracht wird, welche später mit der Kathodenschicht 5 in Berührung gelangen sollen. Dies kann beispielsweise durch ein balkenartiges Auftragsverfahren sichergestellt werden, wobei nur die überstehenden Bereiche der Kontaktierungseinrichtung 21 mit dem die Verbindungsschicht 40 bildenden Material benetzt, bestrichen oder dergleichen werden.

Nach dem Fügen des Brennstoffzellenstapels 1 werden die Keramiken der Kathode 5 und der Verbindungsschicht 40 miteinander versintert, sodass ein mechanischer Zugkraftwiderstandsfähiger Verbund ausgebildet wird. Hierzu wird der Brennstoffzellenstapel 1 einer Temperatur deutlich oberhalb der üblichen Betriebstemperatur des Brennstoffzellenstapels 1 ausgesetzt, sodass eine Versinterung dieser Materialien zuverlässig erfolgt.

Gemäß einer bevorzugten Ausführungsform wird zusätzlich zur die Verbindungsschicht 40 ausbildenden Keramik eine zweite keramische Funktionsschicht eingefügt, die durch ihre Struktur und/oder den Zuschlag von so genannten Sinterhilfsmitteln eine Absenkung der erforderlichen Sintertemperatur bewirkt. Die zweiten Funktionsschicht (nicht gezeigt) kann mittels nasskeramischer Beschichtungsverfahren, wie z. B. Siebdruck, Nasspulversprühen oder Dispensoren mit einer Verfahreinheit aufgetragen werden.

Besonders vorteilhaft bei der erfindungsgemäßen Brennstoffzelle bzw. dem erfindungsgemäßen Elektrolyseur sowie dem erfindungsgemäßen Verfahren zu deren bzw. dessen Herstellung ist, dass jede Einzelbrennstoffzelle mit einer benachbarten Einzelbrennstoffzelle einen Verbund eingeht, welcher Zugkräfte in einer Richtung entgegen der Fügerichtung des Brennstoffzellenstapels aufnehmen kann. Hierdurch ist eine auch langfristig hochwertige elektrische Kontaktierung der Kathode mit dem benachbarten Interkonnektor sichergestellt. Zudem ist mit dem erfindungsgemäßen Verfahren eine in einfacher Art und Weise durchführbare und insbesondere im Bereich der Großserienherstellung anwendbare Herstellmethode angegeben. Gleichzeitig weist eine erfindungsgemäße Brennstoffzelle eine erhöhte elektrische Leistungsdichte auf, da durch die erfindungsgemäße Ausbildung der stoffschlüssigen Verbindung zwischen der Kontaktierungseinrichtung 21 und der Kathodenschicht 5 freie Oberflächenabschnitte 70a der freien Oberfläche 70 ausgebildet werden, die nicht von der Verbindungsschicht 40 bedeckt sind und somit die Diffusion der Sauerstoff-Ionen durch die Kathode in keiner Weise behindern.

## Patentansprüche

1. Brennstoffzelle und/oder Elektrolyseur mit einer Elektrolytschicht (3), welche einseitig mit einer Kathodenschicht (5) und anderseitig mit einer Anodenschicht (4) in Verbindung steht, und die Anodenschicht (4) elektrisch und/oder mechanisch mit einem ersten Interkonnektor (7) in Verbindung steht, wobei im Bereich einer freien Seite (20) der Kathodenschicht (5) eine Kontaktierungseinrichtung (21) angeordnet ist, welche sowohl mit einem zweiten Interkonnektor (30) als auch mit der Kathodenschicht (5) elektrisch leitend und mechanisch stoff- und/oder formschlüssig verbunden ist, **dadurch gekennzeichnet, dass** die Verbindung zwischen der Kathodenschicht (5) und der Kontaktierungseinrichtung (21) eine keramische Verbindungsschicht (40) ist.

2. Brennstoffzelle und/oder Elektrolyseur nach Anspruch 1, **dadurch gekennzeichnet, dass** die mechanisch stoffschlüssige Verbindung (31) zwischen der Kontaktierungseinrichtung (21) und dem zweiten Interkonnektor (30) stoffschlüssig, z. B. als Kondensatorentladungsschweißung oder Rollnahtschweißung oder Hartlötung ausgebildet ist.

3. Brennstoffzelle und/oder Elektrolyseur nach Anspruch 1 und/oder 2, **dadurch gekennzeichnet, dass** die keramische Verbindungsschicht aus Keramiken, insbesondere aus der Gruppe der Perovskite, ausgebildet ist, welche der Kathodenkeramik ähnlich sind und daher einen guten elektrischen Kontakt aufgrund der Affinität der Materialien ermöglichen.

4. Brennstoffzelle und/oder Elektrolyseur nach einem oder mehreren der vorangegangenen Ansprüche, **dadurch gekennzeichnet, dass** die Anodenschicht (4) aus einem Keramik-Metall-Verbundwerkstoff aufgebaut ist und z. B. aus Nickel und Zirkondioxid besteht.

5. Brennstoffzelle und/oder Elektrolyseur nach einem oder mehreren der vorangegangenen Ansprüche, **dadurch gekennzeichnet, dass** die Elektrolytschicht (3) aus einem Keramikwerkstoff besteht, z. B. aus Yttriumoxid-stabilisiertem Zirkoniumoxid.

6. Brennstoffzelle und/oder Elektrolyseur nach einem oder mehreren der vorangegangenen Ansprüche, **dadurch gekennzeichnet, dass** die Kathodenschicht (5) aus keramischem Lanthan-Strontium-Manganoxid (LSM) besteht, welches ggf. zusätzlich mit Yttrium-stabilisiertem Zirkoniumoxid (YSZ) vermischt ist.

7. Brennstoffzelle und/oder Elektrolyseur nach einem oder mehreren der vorangegangenen Ansprüche, **dadurch gekennzeichnet, dass** die Anodenschicht (4) auf eine mechanisch tragende metallische oder keramische Substratschicht aufgebracht ist.

8. Brennstoffzelle und/oder Elektrolyseur nach einem oder mehreren der vorangegangenen Ansprüche, **dadurch gekennzeichnet, dass** die Anodenschicht (4) mit einer der Elektrolytschicht (3) gegenüberliegenden freien Seite (6) mit einem ersten Interkonnektor (7) in Verbindung steht.

9. Brennstoffzelle und/oder Elektrolyseur nach einem oder mehreren der vorangegangenen Ansprüche, **dadurch gekennzeichnet, dass** der Interkonnektor (7) gaskanalfrei ausgebildet ist.

10. Brennstoffzelle und/oder Elektrolyseur nach einem oder mehreren der vorangegangenen Ansprüche, **dadurch gekennzeichnet, dass** die Kontaktierungseinrichtung (21) gasdurchlässig ist.

11. Brennstoffzelle und/oder Elektrolyseur nach einem oder mehreren der vorangegangenen Ansprüche, **dadurch gekennzeichnet, dass** die Anodenschicht (4) mittels einer Hartlötung, einer Kondensatorentladungsschweißung oder durch Laserlöten oder Rollnahtschweißen mit dem ersten Interkonnektor (7) verbunden ist.

12. Brennstoffzelle und/oder Elektrolyseur nach einem oder mehreren der vorangegangenen Ansprüche, **dadurch gekennzeichnet, dass** auf der der Elektrolytschicht (3) gegenüberliegenden freien Seite (20) der Kathodenschicht (5) die Kontaktierungseinrichtung (21) angeordnet ist, wobei die Kontaktierungseinrichtung (21) im Wesentlichen schichtförmig ausgebildet ist und beispielsweise ein Gestrick, Gewirk, Netz oder ein perforiertes Blech ist.

13. Brennstoffzelle und/oder Elektrolyseur nach einem oder mehreren der vorangegangenen Ansprüche, **dadurch gekennzeichnet, dass** die Kontaktierungseinrichtung (21) aus einem elektrisch leitenden Material ausgebildet ist, wobei die Kontaktierungseinrichtung (21) in einer Richtung (22) senkrecht zu den Schichtebenen der Elektrolytschicht (3), der Anodenschicht (4), der Kathodenschicht (5) und der Kontaktierungseinrichtung (21) elastisch ausgebildet ist.

14. Brennstoffzelle und/oder Elektrolyseur nach einem oder mehreren der vorangegangenen Ansprüche, **dadurch gekennzeichnet, dass** die Kontaktierungseinrichtung (21) als federnd kompressibles Metalldrahtgestrick, Metalldrahtgewirk, Metalldrahtnetz oder Metalldrahtgewölle ausgebildet ist.

15. Brennstoffzelle und/oder Elektrolyseur nach einem oder mehreren der vorangegangenen Ansprüche, **dadurch gekennzeichnet, dass** die Kontaktierungseinrichtung (21) aus einem Metall ausgebildet ist, welches eine stabile passivierende Oberfläche ausbildet.

16. Brennstoffzelle und/oder Elektrolyseur nach einem oder mehreren der vorangegangenen Ansprüche, **dadurch gekennzeichnet, dass** die Oxidhaut des Metalls ein Hochtemperatur-Halbleiter ist.

17. Brennstoffzelle und/oder Elektrolyseur nach einem oder mehreren der vorangegangenen Ansprüche, **dadurch gekennzeichnet, dass** die Kontaktierungseinrichtung (21) aus einem ferritischen Stahl mit hohem Chrom- und niedrigem Aluminiumgehalt sowie ggf. mit einem geringen Anteil von Seltenerdelementen, wie z. B. Yttrium oder Lanthan besteht.

18. Brennstoffzelle und/oder Elektrolyseur nach einem oder mehreren der vorangegangenen Ansprüche, **dadurch gekennzeichnet, dass** die Kontaktierungseinrichtung (21) aus einem dünnen Metalldraht (32) ausgebildet ist, wobei Metalldrahtbogenabschnitte (33) und Metalldrahtbogenabschnitte (34) stoffschlüssig und/oder formschlüssig und zugfest in einer Richtung (22) mit den benachbarten Schichten (30, 5) verbunden sind.

19. Brennstoffzelle und/oder Elektrolyseur nach einem oder mehreren der vorangegangenen Ansprüche, **dadurch gekennzeichnet, dass** die Kontaktierungseinrichtung (21) nur bereichsweise mit der Kathodenschicht (5), insbesondere in Bereichen, in denen metallische Partikel (50) aus der Kathodenoberfläche herausragen, verbunden ist.

20. Verfahren zum Herstellen einer Brennstoffzelle und/oder eines Elektrolyseurs mit einer Elektrolytschicht (3), einer Anodenschicht (4) und einer Kathodenschicht (5), wobei die Anodenschicht (4) mit einem ersten Interkonnektor (7) elektrisch leitend und/oder mechanisch verbunden wird, wobei eine Kontaktierungseinrichtung (21) sowohl mit der Kathodenschicht (5) als auch mit einem zweiten Interkonnektor (30) elektrisch leitend und mechanisch stoffschlüssig und/oder formschlüssig verbunden wird, **dadurch gekennzeichnet, dass** zur elektrisch leitenden und mechanisch stoffschlüssigen und/oder formschlüssigen Verbindung der Kontaktierungseinrichtung (21) mit der Kathodenschicht (5) eine keramische Verbindungsschicht (40) verwendet wird.

21. Verfahren nach Anspruch 20, **dadurch gekennzeichnet, dass** ein Verbund aus der Anodenschicht (4), der Elektrolytschicht (3) und der Kathodenschicht (5) anodenseitig mit einer freien Flachseite eines ersten Interkonnektors (7) verbunden wird, wobei die Verbindung elektrisch leitend und/oder mechanisch stoffschlüssig ausgebildet wird.

22. Verfahren nach Anspruch 20 und/oder 21, **dadurch gekennzeichnet, dass** die Verbindung zwischen der Anodenschicht (4) und dem ersten Interkonnektor (7) mittels Hartlötens und/oder mittels Kondensatorentladungsschweißens und/oder mittels Laserlötens hergestellt wird.

23. Verfahren nach einem oder mehreren der Ansprüche 20 bis 22, **dadurch gekennzeichnet, dass** die Verbindung der Kontaktierungseinrichtung (21) mit einem zweiten Interkonnektor (30) mittels Hartlötens und/oder Kondensatorentladungsschweißens und/oder Laserlötens hergestellt wird.

24. Verfahren nach einem oder mehreren der Ansprüche 20 bis 23, **dadurch gekennzeichnet, dass** die Verbindungsschicht (40) zur Montage der Brennstoffzelle und/oder des Elektrolyseurs auf eine freie Seite der Kathode (5) mittels nasser Applikationstechniken, z.B. als Paste aufgetragen wird.

25. Verfahren nach einem oder mehreren der Ansprüche 20 bis 24, **dadurch gekennzeichnet, dass** die Verbindungsschicht (40) zur Montage der Brennstoffzelle und/oder des Elektrolyseurs auf eine freie Seite der Kontaktierungseinrichtung (21) zumindest teilbereichsweise aufgetragen wird.

## Claims

1. Fuel cell and/or electrolyser with an electrolyte layer (3), one side of which is in contact with a cathode layer (5) and the other side of which is in contact with an anode layer (4), and the anode layer (4) is electrically and/or mechanically in contact with a first interconnector (7), wherein, in the area of a free side (20) of the cathode layer (5), a contacting device (21) is arranged, which is connected in an electrically conductive manner and mechanically by material bond and/or positive fit with a second interconnector (30) as well as with the cathode layer (5), **characterised in that** the connection between the cathode layer (5) and the contacting device (21) is a ceramic connecting layer (40).

2. Fuel cell and/or electrolyser according to claim 1, **characterised in that** the mechanical material-bond connection (31) between the contacting device (21) and the second interconnector (30) is formed to be a material bond, e.g. as a capacitor discharge weld or a rolled bead weld or a brazing joint.

3. Fuel cell and/or electrolyser according to claim 1 and/or 2, **characterised in that** the ceramic connecting layer is formed of ceramic materials, in particular from the group of perovskites, which are similar to the ceramic material of the cathode and therefore make a good electrical contact possible because of the affinity of the materials.

4. Fuel cell and/or electrolyser according to one or more of the preceding claims, **characterised in that** the anode layer (4) is constructed of a ceramic-metal composite material and consists of nickel and zirconium dioxide, for example.

5. Fuel cell and/or electrolyser according to one or more of the preceding claims, **characterised in that** the electrolyte layer (3) consists of a ceramic material, for example an yttrium oxide-stabilized zirconium oxide.

6. Fuel cell and/or electrolyser according to one or more of the preceding claims, **characterised in that** the cathode layer (5) comprises ceramic lanthanum-strontium-manganese oxide (LSM) which, if desired, is additionally mixed with yttrium-stabilized zirconium oxide (YSZ).

7. Fuel cell and/or electrolyser according to one or more of the preceding claims, **characterised in that** the anode layer (4) is applied onto a mechanically supporting metallic or ceramic substrate layer.

8. Fuel cell and/or electrolyser according to one or more of the preceding claims, **characterised in that** the anode layer (4) is in contact with a first interconnector (7) over a free side (6) located opposite the electrolyte layer (3).

9. Fuel cell and/or electrolyser according to one or more of the preceding claims, **characterised in that** the interconnector (7) is formed to be free of gas conduits.

10. Fuel cell and/or electrolyser according to one or more of the preceding claims, **characterised in that** the contacting device (21) is gas-permeable.

11. Fuel cell and/or electrolyser according to one or more of the preceding claims, **characterised in that** the anode layer (4) is connected with the first interconnector (7) by a brazing joint, a capacitor discharge weld, or by laser soldering or rolled bead welding.

12. Fuel cell and/or electrolyser according to one or more of the preceding claims, **characterised in that** the contacting device (21) is arranged on the free side (20) of the cathode layer (5) located opposite the electrolyte layer (3), wherein the contacting device (21) is substantially formed in layers and is a knit material, a net, or a perforated sheet metal plate.

13. Fuel cell and/or electrolyser according to one or more of the preceding claims, **characterised in that** the contacting device (21) is formed of an electrically conductive material, wherein the contacting device (21) is formed to be elastic in a direction (22) perpendicular to the layer levels of the electrolyte layer (3), the anode layer (4), the cathode layer (5) and the contacting device (21).

14. Fuel cell and/or electrolyser according to one or more of the preceding claims, **characterised in that** the contacting device (21) is formed as a resiliently compressible metallic wire knit material, metallic wire net or metallic wire-wool material.

15. Fuel cell and/or electrolyser according to one or more of the preceding claims, **characterised in that** the contacting device (21) is formed of a metal which forms a stable passivating surface.

16. Fuel cell and/or electrolyser according to one or more of the preceding claims, **characterised in that** the oxide film of the metal is a high-temperature semiconductor.

17. Fuel cell and/or electrolyser according to one or more of the preceding claims, **characterised in that** the contacting device (21) is made of ferritic steel with a high chromium and low aluminium content, as well as, optionally, a small proportion of rare earth elements such as yttrium or lanthanum.

18. Fuel cell and/or electrolyser according to one or more of the preceding claims, **characterised in that** the contacting device (21) is formed of a thin metal wire (32), wherein curved metal wire sections (33) and curved metal wire sections (34) are connected with the adjoining layers (30, 5) by material bond and/or positive fit and in a tension-resistant manner in one direction (22).

19. Fuel cell and/or electrolyser according to one or more of the preceding claims, **characterised in that** the contacting device (21) is connected with the cathode layer (5) only in some areas, in particular in areas where metallic particles (50) protrude from the cathode surface.

20. Method for producing a fuel cell and/or an electrolyser having an electrolyte layer (3), an anode layer (4) and a cathode layer (5), wherein the anode layer (4) is connected in an electrically conductive and/or mechanical manner with a first interconnector (7), wherein a contacting device (21) is connected in an electrically conductive manner and mechanically by material bond and/or positive fit both with the cathode layer (5) and with a second interconnector (30), **characterised in that** a ceramic connecting layer (40) is used for the electrically conductive and mechanical material-bond and/or positive connection of the contacting device (21) with the cathode layer (5).

21. Method according to claim 20, **characterised in that** a combination of the anode layer (4), the electrolyte layer (3) and the cathode layer (5) is connected at the anode side with a free flat side of a first interconnector (7), wherein the connection is formed to be electrically conductive and/or mechanically by material bond.

22. Method according to claim 20 and/or 21, **characterised in that** the connection between the anode layer (4) and the first interconnector (7) is established by means of brazing and/or by means of capacitor discharge welding and/or by means of laser soldering.

23. Method according to one or more of the claims 20 to 22, **characterised in that** the connection between the contacting device (21) and a second interconnector (30) is established by means of brazing and/or by means of capacitor discharge welding and/or by means of laser soldering.

24. Method according to one or more of the claims 20 to 23, **characterised in that** the connecting layer (40) for mounting the fuel cell and/or the electrolyser is applied onto a free side of the cathode (5) using wet application techniques, for example as a paste.

25. Method according to one or more of the claims 20 to 24, **characterised in that** the connecting layer (40) for mounting the fuel cell and/or the electrolyser is applied onto a free side of the contacting device (21) at least in partial areas.

## Revendications

1. Pile à combustible et/ou électrolyseur, comprenant une couche d'électrolyte (3) qui est jointe d'un côté à une couche de cathode (5) et d'un autre côté à une couche d'anode (4), et la couche d'anode (4) est reliée électriquement et/ou mécaniquement à un premier connecteur interne (7), dans laquelle, dans la zone d'un côté libre (20) de la couche de cathode (5) est agencé un moyen de mise en contact (21), lequel est relié de manière à conduire l'électricité et relié mécaniquement par coopération de matières et/ou par coopération de formes aussi bien à un second connecteur interne (30) qu'à la couche de cathode (5), **caractérisée en ce que** la jonction entre la couche de cathode (5) et le moyen de mise en contact (21) est une couche de liaison céramique (40).

2. Pile à combustible et/ou électrolyseur selon la revendication 1, **caractérisée en ce que** la liaison mécanique par coopération de matières (31) entre le moyen de mise en contact (21) et le second connecteur interne (30) est réalisée par coopération de matières, par exemple sous forme de soudure par décharge de condensateur, par soudure à la roulette, ou par soudure par apport de brasage dur.

3. Pile à combustible et/ou électrolyseur selon la revendication 1 et/ou 2, **caractérisée en ce que** la couche de liaison céramique est réalisée en céramique, en particulier du groupe des pérovskites, qui est analogue à la céramique de cathode et permet donc un bon contact électrique grâce à l'affinité des matériaux.

4. Pile à combustible et/ou électrolyseur selon l'une ou plusieurs des revendications précédentes, **caractérisée en ce que** la couche d'anode (4) est constituée en un matériau composite céramique/métal et formée par exemple de nickel et de dioxyde de zirconium.

5. Pile à combustible et/ou électrolyseur selon l'une ou plusieurs des revendications précédentes, **caractérisée en ce que** la couche d'électrolyte (3) est en un matériau céramique, par exemple en oxyde de zirconium stabilisé à l'oxyde d'yttrium.

6. Pile à combustible et/ou électrolyseur selon l'une ou plusieurs des revendications précédentes, **caractérisée en ce que** la couche de cathode (5) est en céramique oxyde de lanthane-strontium-manganèse (LSM) auquel est mélangé le cas échéant en supplément de l'oxyde de zirconium stabilisé à l'yttrium (YSZ).

7. Pile à combustible et/ou électrolyseur selon l'une ou plusieurs des revendications précédentes, **caractérisée en ce que** la couche d'anode (4) est appliquée sur une couche de substrat métallique ou céramique porteuse sur le plan mécanique.

8. Pile à combustible et/ou électrolyseur selon l'une ou plusieurs des revendications précédentes, **caractérisée en ce que** la couche d'anode (4) est en liaison avec un premier connecteur intérieur (7) par un côté libre (6) à l'opposé de la couche d'électrolyte (3).

9. Pile à combustible et/ou électrolyseur selon l'une ou plusieurs des revendications précédentes, **caractérisée en ce que** le connecteur interne (7) est réalisé dépourvu de canaux à gaz.

10. Pile à combustible et/ou électrolyseur selon l'une ou plusieurs des revendications précédentes, **caractérisée en ce que** le moyen de mise en contact (21) est perméable aux gaz.

11. Pile à combustible et/ou électrolyseur selon l'une ou plusieurs des revendications précédentes, **caractérisée en ce que** la couche d'anode (4) est reliée au premier connecteur interne (7) au moyen d'un brasage dur, d'une soudure par décharge de condensateur ou soudure au laser, ou encore soudure à la roulette.

12. Pile à combustible et/ou électrolyseur selon l'une ou plusieurs des revendications précédentes, **caractérisée en ce que** le moyen de mise en contact (21) est agencé sur le côté libre (20) de la couche de cathode (5) à l'opposé de la couche d'électrolyte (3), ledit moyen de mise en contact (21) étant réalisé sensiblement en forme de couche, et est par exemple un tricot, un textile, un filet ou une tôle perforée.

13. Pile à combustible et/ou électrolyseur selon l'une ou plusieurs des revendications précédentes, **caractérisée en ce que** le moyen de mise en contact (21) est réalisé en un matériau conducteur de l'électricité, ledit moyen de mise en contact (21) étant réalisé élastique dans une direction (22) perpendiculaire au plan des couches de la couche d'électrolyte (3), de la couche d'anode (4), de la couche de cathode (5) et du moyen de mise en contact (21).

14. Pile à combustible et/ou électrolyseur selon l'une ou plusieurs des revendications précédentes, **caractérisée en ce que** le moyen de mise en contact (21) est réalisé sous forme d'un tricot en fil métallique, d'un textile en fil métallique, d'un réseau en fil métallique, où d'un agglomérat de fil métallique compressible avec effet élastique.

15. Pile à combustible et/ou électrolyseur selon l'une ou plusieurs des revendications précédentes, **caractérisée en ce que** le moyen de mise en contact (21) est réalisé en un métal qui forme une surface de passivation stable.

16. Pile à combustible et/ou électrolyseur selon l'une ou plusieurs des revendications précédentes, **caractérisée en ce que** la peau d'oxyde du métal est un semi-conducteur à haute température.

17. Pile à combustible et/ou électrolyseur selon l'une ou plusieurs des revendications précédentes, **caractérisée en ce que** le moyen de mise en contact (21) est un acier ferritique avec une forte teneur en chrome et une faible teneur en aluminium, ainsi que le cas échéant une faible proportion d'éléments choisis dans les terres rares, comme par exemple yttrium ou lanthane.

18. Pile à combustible et/ou électrolyseur selon l'une ou plusieurs des revendications précédentes, **caractérisée en ce que** le moyen de mise en contact (21) est réalisé en un fil métallique mince (32), des tronçons cintrés de fil métallique (33) et des tronçons cintrés de fil métallique (34) étant reliés avec les couches voisines (30, 5) par coopération de matières et/ou par coopération de formes et de manière à résister à la traction dans une direction (22).

19. Pile à combustible et/ou électrolyseur selon l'une ou plusieurs des revendications précédentes, **caractérisée en ce que** le moyen de mise en contact (21) n'est relié que par zones avec la couche de cathode (5), en particulier dans les zones dans lesquelles des particules métalliques (50) dépassent hors de la surface de la cathode.

20. Procédé pour fabriquer une pile à combustible et/ou un électrolyseur comprenant une couche d'électrolyte (3), une couche d'anode (4) et une couche de cathode (5), dans lequel la couche d'anode (4) est reliée de manière à conduire l'électricité et/ou est reliée mécaniquement à un premier connecteur interne (7), dans lequel un moyen de mise en contact (21) est relié aussi bien à la couche de cathode (5) qu'à un second connecteur interne (30) de manière à conduire l'électricité et/ou mécaniquement par coopération de matières et/ou par coopération de formes, **caractérisé en ce que** pour la liaison électriquement conductrice et mécanique, par coopération de matières et/ou par coopération de formes, du moyen de mise en contact (21) avec la couche de cathode (5) on utilise une couche de liaison céramique (40).

21. Procédé selon la revendication 20, **caractérisé en ce qu'**un composite formé de la couche d'anode (4), de la couche d'électrolyte (3) et de la couche de cathode (5) est relié sur le côté de l'anode à un premier côté plat d'un premier connecteur interne (7), ladite liaison étant réalisée de manière à conduire l'électricité et/ou mécaniquement par coopération de matières.

22. Procédé selon la revendication 20 et/ou 21, **caractérisé en ce que** la liaison entre la couche d'anode (4) et le premier connecteur interne (7) est établie avec apport de matériau de brasage dur et/ou par soudure de décharge de condensateur et/ou par soudage au laser.

23. Procédé selon l'une ou plusieurs des revendications 20 à 22, **caractérisé en ce que** la liaison du moyen de mise en contact (21) avec un second connecteur interne (30) est réalisé avec apport de matériau de brasage dur et/ou par soudure de décharge de condensateur et/ou par soudage au laser.

24. Procédé selon l'une ou plusieurs des revendications 20 à 23, **caractérisé en ce que** la couche de liaison (40) pour le montage de la pile à combustible et/ou de l'électrolyseur est appliqué sur un côté libre de la cathode (5) par des techniques d'application envoi humide, par exemple sous la forme de pâte.

25. Procédé selon l'une ou plusieurs des revendications 20 à 24, **caractérisé en ce que** la couche de liaison (20) pour le montage de la pile à combustible et/ou de l'électrolyseur est appliqué sur un côté libre du moyen de mise en contact (21), au moins sur des zones partielles.
